# FASCICULE DE BREVET EUROPEEN

(11) **EP 0 407 311 B1**
(45) Date de publication et mention de la délivrance du brevet: **21.05.1997**
(21) Numéro de dépôt: 90420308.0
(22) Date de dépôt: 29.06.1990
(51) Int. Cl.: G06F 7/00

(54) **Circuit de brassage de données**
Datenmischungsschaltung
Data shuffling circuit

(30) Priorité: 03.07.1989 FR 8909273
(43) Date de publication de la demande: 09.01.1991
(73) Titulaire: SGS-THOMSON MICROELECTRONICS S.A., 94250 Gentilly (FR)
(72) Inventeur: Artieri, Alain, F-38240 Meylan (FR)
(74) Mandataire: de Beaumont, Michel

(56) Documents cités:
- WO-A-83/04116
- US-A- 3 781 822

## Description

La présente invention concerne un circuit de brassage de données, c'est-à-dire un circuit recevant un train de données et fournissant en sortie ces mêmes données agencées dans un ordre différent et prédéterminé.

De nombreuses applications, notamment dans le domaine du traitement d'image, nécessitent l'utilisation d'opérateurs ou circuits capables de changer l'ordre d'une série de données suivant une séquence préétablie.

Un exemple d'une telle application est le calcul de la transformée bidimensionnelle, telle que la transformée cosinus discrète (DCT), d'un bloc d'image dans une image de télévision où ce problème du brassage intervient plusieurs fois :
- brassage des données pour le calcul de la transformée monodimensionnelle,
- transposition de matrice,
- conversion du balayage de la matrice de coefficients en un balayage zig zag.

Un autre exemple d'application réside dans le cryptage d'un signal vidéo par mélange de pixels.

On va décrire ci-après l'état de la technique et la présente invention dans le cas particulier où l'on souhaite effectuer le balayage zig zag d'un bloc de données. On notera toutefois qu'il ne n'agit là que d'un cas particulier de la présente invention qui est décrit de façon détaillée seulement pour faciliter la compréhension de l'invention.

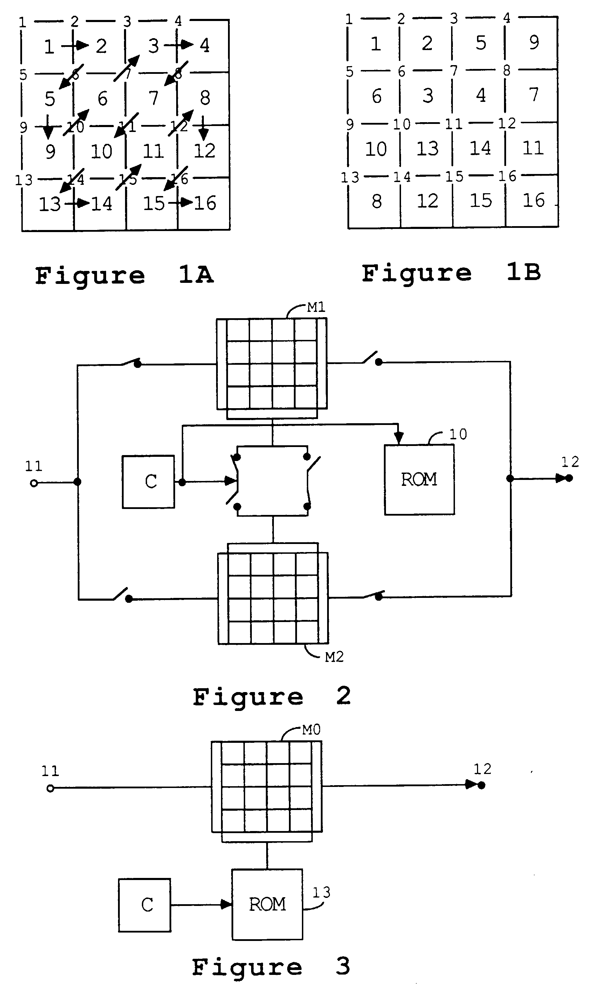

Les figures 1A et 1B illustrent ce qu'est un balayage zig zag. Etant donné une suite de données, par exemple 16 données telles que représentées en figure 1A sous forme d'un bloc d'image 4 x 4, un balayage zig zag consiste à lire ces données selon des diagonales successives, c'est-à-dire comme cela est illustré en figure 1B dans l'ordre :
1, 2, 5, 9, 6, 3, 4, 7, 10, 13, 14, 11, 8, 12, 15, 16.

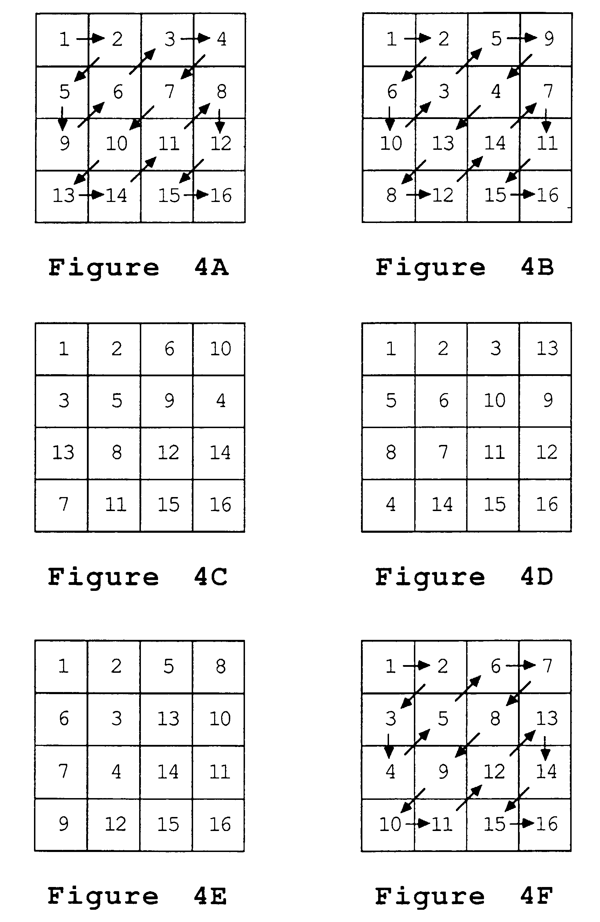

La façon la plus classique de réaliser un tel brassage de données consiste à utiliser un circuit du type de celui illustré en figure 2. Ce circuit comprend deux mémoires dynamiques (RAM) M1 et M2 ayant chacune la taille du train ou bloc de données que l'on veut brasser. Chacune des mémoires est addressable ou bien dans l'ordre naturel de la figure 1A par un compteur C ou bien dans l'ordre correspondant à une séquence mémorisée dans une mémoire morte ROM 10 dont le contenu correspond à ce qui est indiqué en figure 1B pour un brassage zig zag.

Chaque train ou bloc de données arrivant sur une entrée 11 est écrit dans l'une des mémoires dans l'ordre naturel tandis que l'autre mémoire est lue dans l'ordre zig zag vers une sortie 12. Au coup d'après, les données sont écrites dans la mémoire qui vient d'être lue tandis que la mémoire dans laquelle on vient d'écrire est lue.

Cette technique nécessite une capacité de mémorisation de deux trains ou blocs de données dans les mémoires dynamiques M1 et M2 et d'une séquence de mots d'adresse dans la ROM 10.

A titre d'exemple, si l'on considère des blocs 4 x 4 et des mots de 12 bits, la capacité de mémorisation des RAM devra être de 32 mots de 12 bits (384 bits) et la capacité de mémorisation de la ROM 10 de seize mots de 4 bits (64 bits), soit une capacité de mémorisation totale de 448 bits.

Dans le cas de blocs de 64 mots (8 x 8) il convient de prévoir une capacité RAM de 128 (2 x 64) mots de 12 bits (1536 bits) et une ROM d'une capacité de 64 mots de 6 bits (384 bits), soit une capacité de mémorisation totale de 1920 bits.

Pour réduire la capacité de mémorisation nécessaire, on a pensé à utiliser le schéma simplifié illustré en figure 3 comprenant une seule mémoire RAM M0 dont la capacité de mémorisation est égale à la dimension du bloc de données incident que l'on veut transformer recevant les trans de données sur une entrée 11 et les fournissant de façon réordonnée sur une sortie 12. Cette mémoire M0 est adressée par une ROM 13 commandée par un compteur C.

Initialement, la mémoire M0 est remplie du premier bloc de données agencé normalement dans l'ordre de 1 à 16. Pour le bloc de données suivant, la ROM détermine que l'adressage se fait selon un ordre déterminé. Chaque fois qu'une donnée est lue à une adresse spécifiée, une donnée du train incident est simultanément écrite à l'endroit qui vient d'être lu. Cette architecture permet donc de diviser par deux la capacité de la mémoire RAM et de simplifier les circuits d'adressage puisque les lecture/écriture se font séquentiellement dans une même case sans réadressage. Toutefois, il faut prévoir une augmentation de la capacité de la ROM 13 pour fournir les adresses séquentielles nécessaires au traitement de blocs de données successifs. Cette structure a été utilisée dans le cas où le brassage des données correspond à une transposition matricielle (symétrisation par rapport à une diagonale). En effet, cette opération est involutive c'est-à-dire qu'après deux transpositions on retrouve l'ordre initial. Il est donc seulement nécessaire de mémoriser dans la ROM 13 une séquence d'adresse.

Par contre, l'opération est plus complexe dans le cas d'un balayage zig zag, comme cela est illustré dans les figures 4A à 4F pour le cas de blocs de données 4 X 4. La première séquence d'adresses, correspondant à l'ordre naturel est illustrée en figure 4A. La séquence d'adresses suivante est illustrée en figure 4B où l'on peut voir que la troisième adresse correspond à la case 5 et la quatrième à la case 9. La tableau de la figure 4B est obtenu en suivant les flèches représentées en figure 4A. Pour le bloc de données suivant, en suivant la même séquence zig zag que celle qui permet de passer de la figure 4A à la figure 4B et en appliquant cette séquence à la figure 4B, on peut voir que l'ordre successif sera 1, 2, 6, 10... (figure 4C). On passe de même de chacune des figures à la suivante. En regardant la figure 4F, on voit qu'en appliquant un balayage zig zag aux données qui y sont contenues, on retrouve la séquence naturelle de la figure 4A. Il faut donc prévoir six cycles d'adressage dans la ROM pour pouvoir reconvertir selon un ordre zig zag des trains de données successifs.

En considérant les mêmes données numériques que ci-dessus, pour des blocs 4 X 4 de données à 12 bits, il faudra donc prévoir une capacité RAM de 16 mots de 12 bits (192 bits) et une capacité ROM de 6 x 16 mots d'adresse de 4 bits (384 bits), soit une capacité de mémorisation totale de 576 bits.

Dans le cas d'un balayage zig zag de blocs 8 X 8, il faudra enchaîner 136 séquences différentes avant de retomber sur la séquence initiale ce qui nécessite une ROM de stockage de 8704 (136X64) mots de 6 bits soit 51 kbits auxquels il convient d'ajouter les 64 mots de 12 bits de la RAM. Il est donc clair que dans ce cas la solution initiale à deux RAM telle qu'illustrée en figure 2 est beaucoup plus économique que la solution à une RAM telle qu'illustrée en figure 3.

En outre, dans les représentations extrêmement schématiques des figures 2 et 3, on n'a pas figuré les divers décodeurs qui sont nécessairement associés aux ROM de stockage et qui eux aussi occupent une surface de silicium non négligeable.

Un autre inconvénient des circuits de brassage de données de l'art antérieur réside dans le fait que les structures à points mémoire sont inévitablement de fabrication délicate et entraînent la nécessité de prévoir des étapes de tri et de test pour vérifier qu'aucun des points mémoire n'est en défaut.

Un autre inconvénient des structures de l'art antérieur est que le procédé d'utilisation des circuits de brassage décrits nécessite le remplissage initial d'un bloc mémoire complet. Le temps de latence est donc égal à la durée du remplissage initial d'une mémoire complète, c'est-à-dire à la durée d'introduction de tous les mots d'un train de données.

Un objet de la présente invention est de prévoir un circuit de brassage palliant les inconvénients des deux circuits susmentionnés de l'art antérieur et, plus particulièrement :
- réduisant la surface de silicium nécessaire,
- augmentant la fiabilité du système,
- réduisant le temps de latence.

Pour atteindre ces objets ainsi que d'autres, la présente invention prévoit un circuit de brassage de données de type pipeline recevant des trains successifs de n mots de données séquentiels et réordonnant dans chaque train les mots de données selon un ordre prédéterminé, comportant :
- p (p≤n) modules élémentaires de traitement placés en série, chaque module comprenant une entrée, une sortie, un registre de mémorisation d'un mot, et un moyen d'aiguillage pour, en réponse à une commande binaire, connecter l'entrée à la sortie ou bien directement ou bien par l'intermédiaire dudit registre de mémorisation ; et
- des moyens pour fournir cycliquement à chacun des p moyens d'aiguillage une séquence de n bits de commande fixés en fonction dudit ordre prédéterminé,
- des moyens pour introduire séquentiellement les mots dans ledit registre de mémorisation sauf quand les moyens d'aiguillage connecte directement l'entrée à la sortie.

Ainsi, la présente invention évite complètement l'utilisation de mémoires RAM et n'utilise que des registres individuels d'un mot de données qui sont a priori des dispositifs beaucoup plus fiables que des mémoires. En outre, on notera que le circuit selon la présente invention fonctionne en mode pipeline, c'est-à-dire réduit au maximum le temps de latence.

Ces objets, caractéristiques et avantages ainsi que d'autres de la présente invention seront exposés plus en détail dans la description suivante de modes de réalisation particuliers faite en relation avec les figures jointes parmi lesquelles :
les figures 1A et 1B sont des tableaux illustrant un balayage de type zig zag ;
la figure 2 représente un premier circuit de brassage selon l'art antérieur ;
la figure 3 représente un second circuit de brassage selon l'art antérieur ;
les figures 4A à 4F représentent des étapes successives d'adressage associées au circuit de la figure 3 ;
la figure 5 illustre un module élémentaire de traitement selon la présente invention ;
la figure 6 est un chronogramme illustrant le fonctionnement du module élémentaire de la figure 5 pour une séquence particulière d'ordres de sélection ;
la figure 7 illustre un circuit de brassage selon la présente invention ;
la figure 8 illustre une variante du module élémentaire selon la présente invention ; et
la figure 9 illustre un circuit de brassage selon la présente invention utilisant la variante de la figure 8.

La présente invention propose un circuit permettant un réordonnancement séquentiel d'un train de données entre un ordre de départ déterminé et un ordre d'arrivée déterminé par itérations successives réalisées dans des modules élémentaires successifs.

Plus particulièrement, si l'on considère le balayage zig zag, l'ordre de départ est l'ordre naturel allant de 1 à 16 et l'ordre d'arrivée est l'ordre susmentionné 1, 2, 5, 9, 6... 15, 16. Si l'on appelle E la séquence d'entrée et S la séquence de sortie, on pourra utiliser pour passer de E à S un algorithme dit algorithme de tri par bulles c'est-à-dire que pour chaque donnée dans une première série, on regarde dans la série d'arrivée si cette donnée se trouve avant ou après la donnée immédiatement suivante. Si elle se trouve avant, elle reste en place ; si elle se trouve après, elle est décalée jusqu'à ce qu'une donnée se trouve après dans la série d'arrivée. Ainsi, pour passer de la série E à la série S on passe par les séries intermédiaires X1 à X4 illustrées dans le tableau ci-après.

| | | | | | | | | | | | | | | | | |
|---|---|---|---|---|---|---|---|---|---|---|---|---|---|---|---|---|
| E | 1 | 2 | 3 | 4 | 5 | 6 | 7 | 8 | 9 | 10 | 11 | 12 | 13 | 14 | 15 | 16 |
| X₁ | 1 | 2 | 3 | 5 | 6 | 4 | 7 | 9 | 10 | 11 | 8 | 13 | 14 | 12 | 15 | 16 |
| X₂ | 1 | 2 | 5 | 6 | 3 | 4 | 9 | 7 | 10 | 11 | 13 | 14 | 8 | 12 | 15 | 16 |
| X₃ | 1 | 2 | 5 | 6 | 3 | 9 | 4 | 7 | 10 | 13 | 14 | 11 | 8 | 12 | 15 | 16 |
| X₄ | 1 | 2 | 5 | 6 | 9 | 3 | 4 | 7 | 10 | 13 | 14 | 11 | 8 | 12 | 15 | 16 |
| S | 1 | 2 | 5 | 9 | 6 | 3 | 4 | 7 | 10 | 13 | 14 | 11 | 8 | 12 | 15 | 16 |

Plus précisément, la série X₁ est obtenue à partir de la série de départ E de la façon suivante :

les éléments 1 et 2 de la série de départ sont dans cet ordre dans la série d'arrivée. Ils ne sont donc pas déplacés. De même l'élément 3 est dans la série S avant l'élément 4 il reste donc en place. Par contre, l'élément 4 se trouve dans la série S après l'élément 5, il est donc interchangé avec l'élément 5. De même, il se trouve après l'élément 6 il est donc également interchangé avec l'élément 6. Par contre cet élément 4 se trouve avant l'élément 7 il reste donc en place, suivi de l'élément 7 et ainsi de suite. L'élément suivant est l'élément 7. Le 8 intervient après 9, 10, 11 dans l'ordre d'arrivée mais avant 12 ; les éléments suivants sont donc 9, 10, 11, 8. 12 intervient après 13 et 14 dans l'ordre d'arrivée mais avant 15 ; les éléments suivants sont donc 13, 14, 12. Enfin viennent 15 et 16 qui sont dans cet ordre dans la série d'arrivée.

Par itérations successives on peut donc passer de la série E à la série S. Dans le cas particulier considéré, il faut prévoir avec l'algorithme décrit quatre étapes intermédiaires X₁, X₂, X₃ et X₄.

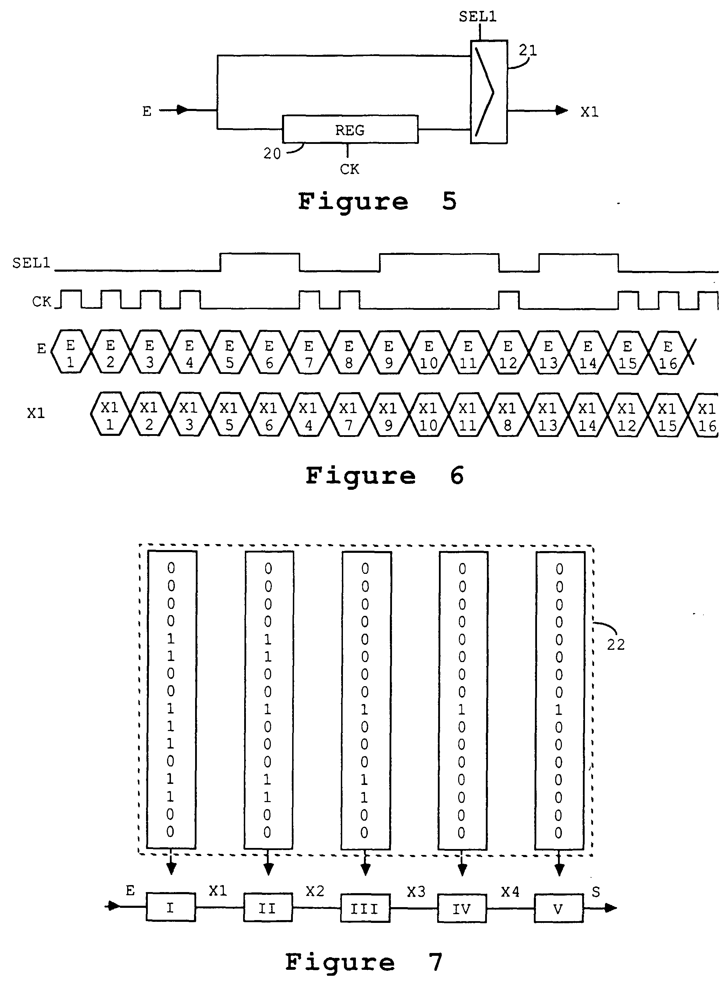

La figure 5 représente un module élémentaire de traitement permettant de mettre en oeuvre l'algorithme de tri par bulles décrit précédemment pour passer d'une série à la série suivante. On a désigné par E l'entrée de ce module et par X₁ sa sortie. Ce module comprend un registre 20 actionné au rythme d'une horloge CK correspondant au rythme d'introduction des données et un circuit de sélection 21 actionné par un signal SEL1.

La figure 6 illustre un chronogramme destiné à expliquer le fonctionnement du circuit de la figure 5. Le signal SEL1 est un signal binaire, correspondant par exemple à un élément d'une suite de zéros et de uns mémorisés dans une mémoire morte. Quand le signal SEL1 est à bas niveau le registre est actionné et sa sortie est reliée à la sortie X₁. Quand le signal SEL1 est à haut niveau, l'entrée E est directement reliée à la sortie X₁, aucun décalage n'étant appliqué au registre. Les deux dernières lignes de la figure 6 représentent les signaux E et X₁, le signal X₁ étant décalé du signal E d'un temps d'horloge. On retrouve bien dans le signal X₁ la série X₁ décrite précédemment.

Pour passer de E à S on pourra utiliser comme l'illustre la figure 7 une suite de modules I à V dont chacun correspond àn module de la figure 5. Ces modules sont commandés par des suites de zéros et de uns mémorisés dans des colonnes d'une ROM 22 comprenant autant de colonnes qu'il y a de modules et autant de lignes qu'il y a de mots données dans un train ou bloc à brasser. Comme il y a dans le cas décrit cinq modules, la sortie sera décalée de cinq temps d'horloge par rapport à l'entrée. C'est-à-dire que le temps de latence du circuit selon la présente invention est de 5 alors qu'il était égal au nombre d'éléments d'un train de données à brasser soit 16 pour les circuits de l'art antérieur.

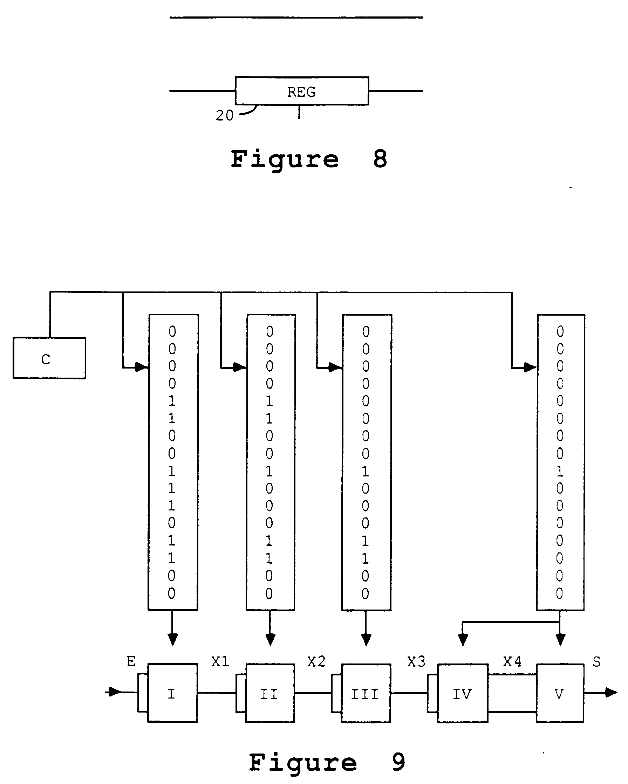

D'autre part, on s'aperçoit qu'en pratique il existe souvent plusieurs séries d'ordres de commande identiques pour des modules successifs (les deux dernières dans le cas de la figure 7). On peut alors utiliser des modules élémentaires simplifiés tels que celui représenté en figure 8, les registres de ces modules étant commandés par la même horloge que les registres des modules identiques du même sous-groupe. La figure 9 illustre donc une variante de la figure 7 dans laquelle le module IV est remplacé par un module du type de celui de la figure 8 dont les deux entrées sont interconnectées et dont les deux sorties vont vers les deux entrées non interconnectées d'un module du type de celui de la figure 5.

On voit donc qu'en pratique, la mémoire ROM destinée à mémoriser les bits d'ordre de sélection est de dimension encore réduite par rapport à la dimension précédemment représentée.

Le temps de latence reste de 5 comme précédemment puis-qu'il y a 5 modules mais le temps critique de transit des données est réduit puisque l'on a supprimé un circuit de sélection.

Avec un circuit selon la présente invention, pour des blocs de 16 données, on utilisera seulement 5 registres d'un mot mémoire et une ROM comprenant quatre fois 16 bits. Pour des blocs 8 X 8, il faudra prévoir 27 registres et l'on montre que par suite d'une optimisation utilisant des circuits simplifiés tels que celui de la figure 8, on a besoin de seulement 15 sélecteurs, c'est-à-dire de mémoriser seulement 15 fois 64 bits (64 = 8 X 8 étant le nombre de mots dans la série que l'on veut brasser). La capacité de mémorisation de la ROM est donc de 15 fois 64 = 960 bits à quoi il convient d'ajouter 27 registres d'un mot de 12 bits chacun. Ces valeurs sont à comparer au 1920 bits de mémoire du mode de réalisation antérieur à 2 RAM et aux 51 kbits du mode de réalisation antérieur à une RAM.

Ainsi, non seulement la présente invention permet d'obtenir un brassage réduisant beaucoup le nombre de cases mémoire nécessaires, mais encore elle utilise des registres qui sont des composants particulièrement fiables et une mémoire ROM de faible capacité.

La présente invention a été décrite seulement dans le cas particulier du brassage zig zag. Plus généralement, elle s'appliquera à tout brassage de données choisi. C'est seulement pour des brassages très simples, tels que des simples transpositions de matrice que les dispositifs de l'art antérieur peuvent être d'une simplicité équivalente.

Un avantage supplémentaire de la présente invention est que, pour une opération de brassage donnée, si l'on veut faire l'opération de brassage inverse (par exemple passer d'un balayage zig zag à un balayage linéaire), la même structure optimisée que celle du type décrit en figure 9 permet avec un contenu différent des ROM de commande de faire l'opération inverse. En outre, le nouveau contenu des ROM est le même que le premier à des permutations de lignes près. Ainsi, au lieu de prévoir une deuxième ROM on pourra, en jouant sur la progression du pointeur d'une ROM unique, utiliser la même mémoire de bits de commande.

De plus, on a décrit précédemment la mémorisation des bits de commande dans des ROM, on pourrait utiliser tout autre moyen pour envoyer une suite présélectionnée de bits de commande, par exemple des réseaux logiques programmables (PLA).

## Revendications

1. Circuit de brassage de données de type pipeline recevant des trains successifs de n mots de données séquentiels et réordonnant dans chaque train les mots de données selon un ordre prédéterminé indépendant des valeurs des mots, caractérisé en ce qu'il comprend :
- p (p≤n) modules élémentaires de traitement placés en série, chaque module comprenant :
. une entrée,
. une sortie,
. un registre (20) de mémorisation d'un mot,
. un moyen d'aiguillage (21) pour, en réponse à une commande binaire, connecter l'entrée à la sortie ou bien directement ou bien par l'intermédiaire dudit registre (20) de mémorisation ;
- des moyens pour fournir cycliquement à chacun des p moyens d'aiguillage une séquence de n bits de commande fixés en fonction dudit ordre prédéterminé ; et
- des moyens (CK) pour introduire séquentiellement les mots dans ledit registre (20) de mémorisation sauf quand le moyen d'aiguillage (21) connecte directement l'entrée à la sortie.

2. Circuit de brassage de données selon la revendication 1, caractérisé en ce que, quand des modules élémentaires successifs sont commandés par des séquences identiques, les moyens d'aiguillage qui les séparent sont supprimés, les séquences identiques sont appliquées aux registres de mémorisation des modules élémentaires successifs et la transmission des mots entre modules élémentaires successifs se fait par l'intermédiaire de deux lignes de connexion.

## Patentansprüche

1. Datenschieber der Pipeline-Bauart zum Empfang von aufeinanderfolgenden Folgen von n-sequenziellen Datenworten und zur erneuten Anordnung der Datenworte in jeder Folge gemäß einer vorbestimmten Ordnung und unabhängig vom Wert der Worte, dadurch gekennzeichnet, daß folgendes vorgesehen ist:
- p (pµn) in Serie angeordnete Verarbeitungseinheiten, wobei jede Einheit folgendes aufweist:
einen Eingang,
einen Ausgang,
ein Ein-Wortspeicherregister (20),
Leit- oder Lenkmittel (21), um ansprechend auf eine Binärsteuerung den Eingang mit dem Ausgang zu verbinden, und zwar entweder direkt oder über das Speicherregister (20);
- Mittel (CK) zum periodischen Beliefern jedes der p Leitmittel mit einer Sequenze von n Steuerbits bestimmt als eine Funktion der erwähnten vorbestimmten Ordnung; und
- Mittel (CK) zum sequenziellen Eingeben der Worte in das Speicherregister (20) mit der Ausnahme dann, wenn die Speichermittel (21) den Eingang direkt mit dem Ausgang verbinden.

2. Datenschieber nach Anspruch 1, dadurch gekennzeichnet, daß dann, wenn aufeinanderfolgende Elementareinheiten durch identische Sequenzen gesteuert werden, die Lenk- oder Leitmittel die Sequenzen diese unterteilen, unterdrückt werden, wobei identische Sequenzen an die Speicherregister aufeinanderfolgender Elementareinheiten angelegt werden, und die Übertragung der Worte zwischen aufeinanderfolgenden Elementareinheiten über zwei Verbindungsleitungen erfolgt.

## Claims

1. A data shuffler of the pipeline type receiving successive trains of n sequential data words and re-arranging the data words in each train according to a predetermined order independent from the value of the words, characterized in that it comprises:
- p (pµn) elementary processing units arranged in series, each unit comprising:
an input,
an output,
a one-word storage register (20),
a steering means (21) in order, in response to a binary control, to connect the input to the output either directly or through said storage register (20);
- means (CK) for periodically supplying each of the p steering means with a sequence of n control bits determined as a function of said predetermined order; and
- means (CK) for sequentially entering the words in said storage register (20) except when the steering means (21) directly connect the input to the output.

2. A data shuffler according to claim 1, characterized in that, when successive elementary units are controlled by identical sequences, the steering means which separate them are suppressed, the identical sequences are applied to the storage registers of the successive elementary units, and the transmission of the words between successive elementary units is made through two connection lines.
